# EUROPÄISCHE PATENTSCHRIFT

(11) **EP 0 618 649 B1**
(45) Veröffentlichungstag und Bekanntmachung des Hinweises auf die Patenterteilung: **18.09.1996**
(21) Anmeldenummer: 94104461.2
(22) Anmeldetag: 22.03.1994
(51) Int. Cl.: H01S 3/06, H04B 10/16

(54) **Faseroptischer Verstärker**
Fiber optic amplifier
Amplificateur à fibres optiques

(30) Priorität: 30.03.1993 DE 4310294; 12.05.1993 DE 4315846
(43) Veröffentlichungstag der Anmeldung: 05.10.1994
(73) Patentinhaber: Alcatel SEL Aktiengesellschaft, D-70435 Stuttgart (DE)
(72) Erfinder: Junginger, Bernhard, D-71083 Herrenberg (DE); Fritschi, Rainer, D-70825 Korntal-Münchingen (DE); Krimmel, Heinz, D-70469 Stuttgart (DE)
(74) Vertreter: Pohl, Herbert, Dipl.-Ing

(56) Entgegenhaltungen:
- EP-A- 0 517 503
- DE-A- 4 028 790
- GB-A- 2 244 595

## Beschreibung

Die Erfindung betrifft einen faseroptischen Verstärker der im Oberbegriff des Patentanspruchs 1 näher bezeichneten Ausführung.

Derartige faseroptische Verstärker werden insbesondere in Systemen der optischen Nachrichtentechnik verwendet. Sie sind in optische Übertragungsstrecken eingefügt und verstärken das in einer Übertragungsleitung geführte Signallicht. Um die Lichtleistung steuern zu können, ist es erwünscht, z.B. die Eingangs- oder Ausgangsleistung des Verstärkers zu messen.

Aus zwei Artikeln der Zeitschrift "Journal of LIGHTWAVE TECNNOLOGY", Vol. 9, No. 2, Februar 1991, Seiten 261 bis 265 und Seiten 291 bis 296 sind faseroptische Verstärker bekannt, bei denen die Signal- oder Pumpleistung an einem Zweig der Ausgangsseite des Pumpkopplers detektiert wird. Je nach verwendetem Pumpkoppler kann es dabei zu Polarisations- oder Wellenlängenabhängigkeiten kommen. Am Monitorarm des Pumpkopplers läßt sich jedoch i.a. nur ein Detektor anbringen.

Aus der Veröffentlichung "Optical Amplifiers and Their Applications, Technical Digest, 1992 (Optical Society of America, Washington, D.C., 1992) Bd. 17, Seiten ThA4-1/91 bis ThA4-4/94" ist bekannt, am Eingang und/oder Ausgang des faseroptischen Verstärkers gesonderte Meßkoppler einzuspleißen und die an einem Zweig ausgekoppelte Lichtleistung zu detektieren. Dies resultiert aus der an optische Übertragungssysteme gestellten Forderung, daß die Übertragungsstrecke augensicher sein soll, d.h., daß zu keinem Zeitpunkt das Auge einer Person, die absichtlich oder unabsichtlich in einen unterbrochenen Lichtwellenleiter blickt, gefährdet sein darf. Um das zu gewährleisten, muß das System oder einzelne Systembestandteile im Falle eines Faserbruchs abgeschaltet werden.

Eine Unterbrechung der Übertragungsstrecke kann z.B. dadurch festgestellt werden, indem die Eingangslichtleistung eines faseroptischen Verstärkers überwacht wird. Eine fehlende Eingangslichtleistung kann nämlich bedeuten, daß die Übertragungstrecke vor diesem faseroptischen Verstärker unterbrochen ist.

Aus der oben genannten Literatur ist bekannt, die Eingangslichtleistung eines faseroptischen Verstärkers zu überwachen. Dort wird ein Teil der Eingangslichtleistung durch einen Koppler, der Bestandteil des faseroptischen Verstärkers ist, ausgekoppelt und von einer Photodiode detektiert. Dadurch, daß dem verstärkenden Teil des faseroptischen Verstärkers weniger Lichtleistung zur Verfügung steht und durch das Einfügen des Kopplers eine zusätzliche Dämpfung verursacht wird, verschlechtert sich das Signal-Rausch Verhältnis. Außerdem entsteht durch diesen Koppler ein zusätzlicher Aufwand an Material und Arbeitszeit.

Der Erfindung liegt die Aufgabe zugrunde, einen faseroptischen Verstärker mit einer Anordnung zu schaffen, die auf einfache Weise eine Überwachung der Lichtleistungen gestattet, die z.B. in den Kern der mit einem Seltene Erde Element dotierten Faser eintreten und/oder austreten. Diese Aufgabe wird erfindungsgemäß mit den im Anspruch 1 angegebenen Merkmalen gelöst. Eine vorteilhafte Ausgestaltung des Gegenstandes des Anspruchs 1 ist den Unteransprüchen zu entnehmen.

Die Erfindung nutzt in vorteilhafter Weise den z.B. aus der DE 40 28 790 C1 bekannten Effekt aus, daß an einer Verbindungsstelle zwischen zwei Lichtwellenleitern mit einem Querschnittssprung der Kerne detektierbare Lichtleistung abgestrahlt wird. Für die Ausnutzung des Effekts ist es von Vorteil, daß bei faseroptischen Verstärkern keine Manipulationen an den Fasern erforderlich sind, weil in der Regel die Fasern, aus denen der Pumpkoppler hergestellt ist, einen anderen Modenfelddurchmesser haben als das mit Erbium dotierte Faserstück.

Die Erfindung wird anhand von Zeichnungen wie folgt näher erläutert. In den Zeichnungen zeigen:
- Fig. 1: ein Ausführungsbeispiel eines faseroptischen Verstärkers in schematischer Darstellung;
- Fig. 2: eine schematische Darstellung des vergrößerten Ausschnitts einer Spleißstelle des Verstärkers der Fig. 1 mit darauf ausgerichteten Detektoren.
- Fig. 3: ein Diagramm über die Abhängigkeit der Ausgangslichtleistung von der Eingangslichtleistung eines faseroptischen Verstärkers mit Pumpleistung als Parameter.

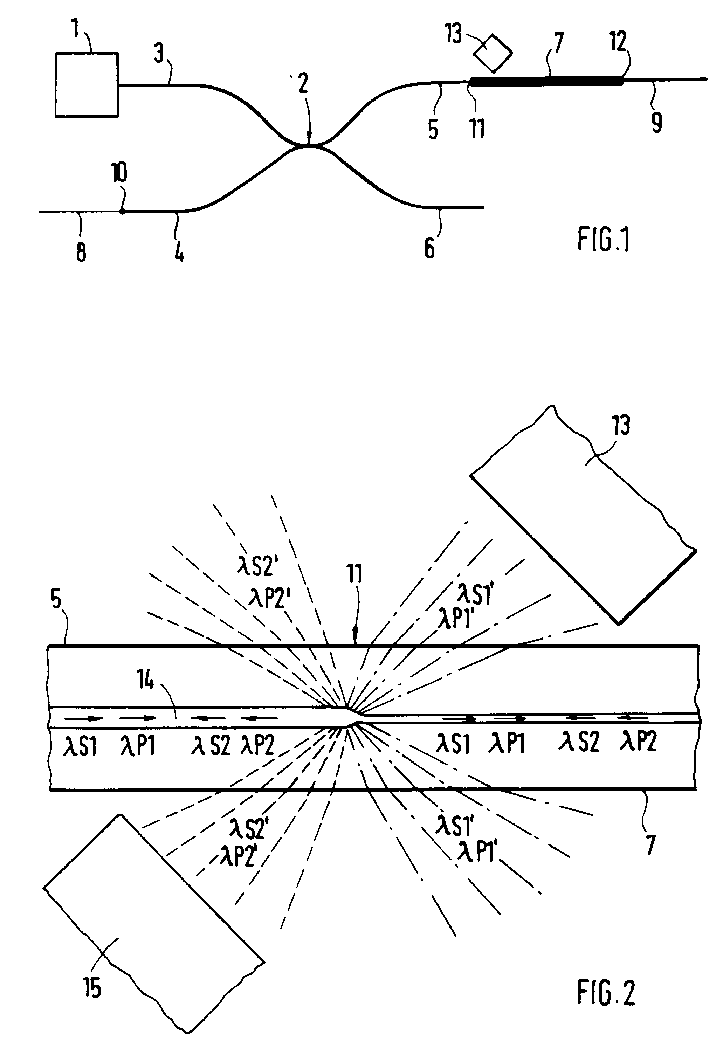

Der faseroptische Verstärker besteht aus einer Pumplichtquelle 1, einem Pumpkoppler 2 mit vier Anschlüssen 3 bis 6 und einem Stück Faser 7, die z.B. mit Erbium dotiert ist, im folgenden kurz aktives Faserstück genannt. Der erste Anschluß 3 des Pumpkopplers 2 ist mit der Pumplichtquelle 1, der zweite Anschluß 4 mit dem Lichtwellenleiter einer ankommenden Übertragungsleitung 8 und der dritte Anschluß 5 mit einem Ende 11 des aktiven Faserstücks 7 verbunden, dessen weiterführendes anderes Anschlußende 12 mit dem Lichtwellenleiter einer abgehenden Übertragungsleitung 9 verbunden ist. Der eventuell vorhandene vierte Anschluß 6 des Pumpkopplers 2 bleibt in diesem Fall frei (Fig. 1).

In dem faseroptischen Verstärker werden die im Faserstück 7 aktiven Ionen mit Hilfe der Pumplicht P1 emittierenden Pumplichtquelle 1 angeregt, um anschließend die Lichtwellen des von der ankommenden Übertragungsleitung 8 geführten Signallichts S1 zu verstärken. Die Lichtwellenleiter der ankommenden und der abgehenden Übertragungsleitungen 8, 9 bestehen hier aus handelsüblichen Einmoden-Standardfasern mit 9 µm Kerndurchmesser und 125 µm Manteldurchmesser. Zwischen der ankommenden Übertragungsleitung 8 und dem Pumpkoppler 2 kann bedarfsweise ein Faserspleiß oder eine Steckverbindung vorgesehen sein. Die Verbindung vom dritten Anschluß 5 des Pumpkopplers 2 zum aktiven Faserstück 7 und dessen Verbindung mit der abgehenden Übertragungsleitung 9 sind durch Spleiße hergestellt.

Beim Betrieb des faseroptischen Verstärkers werden durch das Pumplicht die Erbium-Ionen von einem Grundzustand in einen angeregten Zustand überführt, von dem aus sie, entweder durch spontane oder stimulierte Emission, wieder in den Grundzustand übergehen. Die stimulierte Emission wird von dem durch das aktive Faserstück 7 laufenden und zu verstärkenden optischen Signal angeregt. Die spontane Emission wird im Faserstück 7 ebenfalls verstärkt; diese verstärkte spontane Emission (engl.: amplified spontaneous emission, ASE) ist ursächlich für das in einem faseroptischen Verstärker auftretende Rauschen.

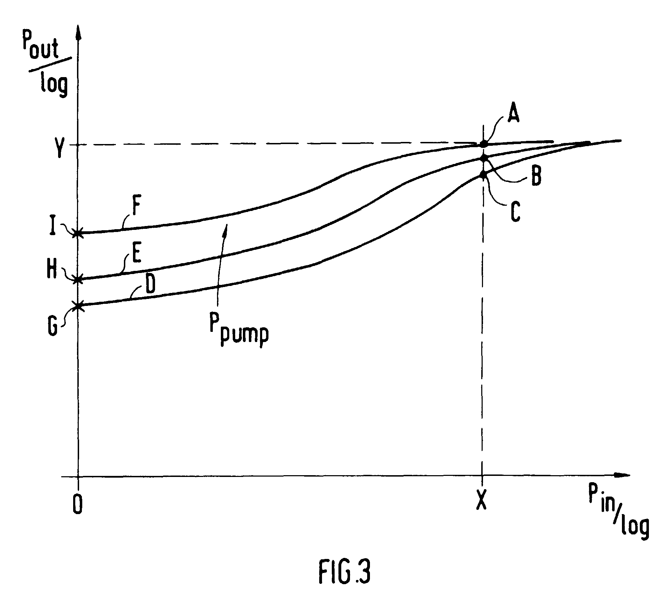

Das zu verstärkende optische Signal tritt mit einer Eingangslichtleistung Pᵢₙ in den faseroptischen Verstärker ein und verläßt diesen mit einer Ausgangslichtleistung Pₒᵤₜ. Der Zusammenhang zwischen der gesamten Ausgangslichtleistung, das heißt, Summe von Signalleistung und verstärkter Spontanemission und der Eingangslichtleistung ist in Fig. 3 gezeigt, mit der Pumpleistung Pₚᵤₘₚ als Parameter. Es sind drei Kurven D, E, F gezeigt, die drei unterschiedlichen Pumpleistungen entsprechen; wobei die Pumpleistung, beginnend mit der Kurve D, bis zur Kurve F ansteigt. Es wird eine Eingangslichtleistung, durch eine Markierung X gekennzeichnet, und eine Ausgangsleistung, durch eine Markierung Y gekennzeichnet, angenommen, die einem Sollzustand entsprechen. Diesem Sollzustand entspricht ein eingezeichneter Punkt A. Vom Sollzustand abweichende Zustände sind durch eingezeichnete Punkte B, C gekennzeichnet. Wird dem faseroptischen Verstärker zu wenig Eingangslichtleistung zugeführt, wird eine Ausgangslichtleistung detektiert, die praktisch der Leistung des durch die spontane Emission (ASE) verursachten Rauschens entspricht. Dies ist in Fig. 3 ebenfalls durch Punkte G, H, I gekennzeichnet.

Es ergibt sich der folgende Zusammenhang:
- die Ausgangslichtleistung nimmt mit zunehmender Eingangslichtleistung zu,
- die Ausgangslichtleistung nimmt auch mit zunehmender Pumpleistung zu, d.h. bei einer bestimmten Eingangslichtleistung nimmt die Ausgangslichtleistung mit zunehmender Pumpleistung zu.

Die Pumpleistung wird durch einen Strom bestimmt, mit dem die Pumplichtquelle betrieben wird.

Dieser Zusammenhang kann in der Weise ausgewertet werden, daß durch Detektieren der Ausganglichtleistung ein Rückschluß auf die Eingangslichtleistung möglich ist. Eine Abweichung der Ausgangsleistung des Signallichts vom Sollzustand bei konstanter Pumpleistung bedeutet, daß sich die Eingangslichtleistung ändert.

Unterschreitet die Abweichung einen festgelegten Schwellenwert, bedeutet dies, daß keine oder nur wenig Eingangslichtleistung zugeführt wird und der faseroptische Verstärker oder das System abgeschaltet werden muß.

Auch das am Ausgang vorhandene nicht absorbierte Pumplicht kann dazu verwendet werden, zu prüfen, ob am Eingang Signalleistung vorhanden ist. Liegt bei der ankommenden, nicht unterbrochenen Faserstrecke ein ausreichend starkes Eingangssignal an, so wird viel Pumplicht absorbiert, liegt ein zu schwaches Eingangssignal an, wird wenig Pumplicht absorbiert. Eine Sicherheitsschaltung, die den Verstärker erforderlichenfalls abschaltet, wird demnach wie folgt ausgeführt. Zunächst wird bei der Herstellung des Verstärkers im Prüffeld der Zusammenhang zwischen der am Ausgang gemessenen Restpumpleistung und dem Strom der Pumplichtquelle 1 gemessen und in einer beispielsweise aus einem Mikrocomputer bestehenden Auswerteeinrichtung gespeichert. Wird nun im Betrieb das am Ausgang vorhandene Pumplicht gemessen, und überschreitet dessen Intensität den gespeicherten Wert um einen vorherbestimmten Faktor, fehlt das Eingangssignal und der Verstärker wird abgeschaltet. Mittels des vorherbestimmten Faktors wird der Schwellenwert festgelegt.

Das aktive Faserstück 7 hat üblicherweise denselben Manteldurchmesser wie Standardfasern, jedoch einen im Durchmesser kleineren Kern. Deshalb ist an der Spleißstelle 11 zwischen Pumpkoppler 2 (dritter Anschluß 5) und aktivem Faserstück 7 sowie an der Spleißstelle 12 zwischen dem aktiven Faserstück 7 und der abgehenden Übertragungsleitung 9 ein den Kerndurchmesser verändernder Querschnittssprung vorhanden, an dem beim Betrieb des Faserverstärkers Licht streut. Obwohl von der in der Faserstrecke geführten Lichtmenge nur wenige Prozent Lichtanteil auskoppeln, kann dieser detektiert und effektiv ausgewertet werden.

An den Speißstellen sind folgende Messungen möglich:
1. Spleißstelle 11 am Eingang des faseroptischen Verstärkers 7
   1a) Messung des eingangsseitig vorhandenen Signallichts
   1b) Messung des eingangsseitig vorhandenen Pumplichts
   1c) Messung des rückwärts laufenden Lichts im Bereich der Signalwellenlänge
   1d) Messung des rückwärts laufenden Pumplichts
2. Spleißstelle 12 am Ausgang des faseroptischen Verstärkers 7
   2a) Messung des ausgangsseitig vorhandenen Lichts im Bereich der Signalwellenlänge
   2b) Messung des ausgangsseitig vorhandenen (und in der Faser 7 nicht absorbierten) Pumplichts
   2c) Messung des rückwärts laufenden Lichts im Bereich der Signalwellenlänge
3. Spleißstelle 10 am Eingang des Pumpkopplers 2
   3a) Messung des vorwärts laufenden Lichts im Bereich der Signalwellenlänge
   3b) Messung des rückwärts laufenden Lichts im Bereich der Signalwellenlänge

Diese gemessenen Lichtintensitäten können jeweils in einer Auswerteeinrichtung ausgewertet werden und beispielsweise wie folgt zur Steuerung verwendet werden.

### Messung 1a) und Messung 3a)

Unterschreitet die Lichtintensität einen vorgegebenen Schwellenwert, dann wird der faseroptische Verstärker abgeschaltet.

### Messung 1b)

Die gemessene Lichtintensität kann zur Überwachung und Regelung der Pumplichtquelle verwendet werden.

### Messung 2a)

1. Unterschreitet die gemessene Lichtintensität einen vorgegebenen Schwellenwert, dann wird der faseroptische Verstärker abgeschaltet.
2. Messwerterfassung zur Regelung der Ausgangsleistung.

### Messung 2b)

Überschreitet die gemessene Lichtintensität einen vorgegebenen Schwellenwert, dann wird der faseroptische Verstärker abgeschaltet.

### Messung 2c)

Messen der Reflexion von der Übertragungsstrecke.

Die Messungen 1a-1d, 2a-2c sowie 3a und 3b erfolgen im Prinzip jeweils auf die gleiche Weise. Nachfolgend werden beispielsweise die Messungen 1a und 1b näher erläutert.

Für die Messung von im spitzen Winkel zur Ausbreitungsrichtung des im Faserkern 14 geführten Lichtes auskoppelnden Streulichts ist wenigstens an einem Ende des aktiven Faserstücks 7 mindestens ein auf die Spleißstelle (z.B. 11) ausgerichteter Detektor 13 angeordnet. Es ist möglich, das vorhandene Pumplicht, das vorhandene Signallicht oder Pumplicht und Signallicht zu messen. Bei dem in Fig. 1 dargestellten Ausführungsbeispiel des faseroptischen Verstärkers wird wie Fig. 2 veranschaulicht, das Signallicht S1 von der ankommenden Übertragungsleitung 8 und das von der Pumplichtquelle 1 emittierte Pumplicht P1 im Pumpkoppler 2 zusammengeführt und danach durch einen Zweig (Anschluß 5) des Pumpkopplers 2 dem aktiven Faserstück 7 zugeführt. Im aktiven Faserstück 7 wird das Signallicht S1 verstärkt und durch die abgehende Übertragungsleitung 9 weitergeführt. An der Spleißstelle 11 zwischen Pumpkoppler-Anschluß 5 und aktivem Faserstück 7 wird hierbei Signalstreulicht S1' und Pumpstreulicht P1' radial ausgekoppelt. Daher kann durch Anordnung eines entsprechenden wellenlängenselektiven Detektors 13 oder von z.B. aus Filtern bestehenden Mitteln, die dem Detektor 13, 15 vorgeschaltet sind und nur Signal- oder Pumplicht durchlassen, entweder Pumpstreulicht P1' oder Signalstreulicht S1' aufgenommen, in elektrische Detektorsignale umgewandelt und einer Auswerteeinrichtung (nicht dargestellt) zugeleitet werden.

Damit möglichst viel Streulicht P1', S1' empfangen wird, sind die Detektoren zweckmäßigerweise so angeordnet, daß deren Gehäuse mit der Licht empfangenden Seite unmittelbar am Spleiß anliegen.

Sind, bezogen auf Fig. 1, Signaleingang und Signalausgang vertauscht (Eingang Faser 9, Ausgang Faser 8), vertauschen sich die auf die Signalwellenlänge bezogenen Messungen entsprechend. Auch hier gilt die Aussage, daß, wenn das verbleibende Pumplicht, am Spleiß 12 gemessen, einen Schwellenwert überschreitet, am Eingang (Faser 9) des faseroptischen Verstärkers kein Signallicht vorhanden ist.

Wird das optische Übertragungssystem bidirektional betrieben, sind für beide Übertragungsrichtungen die gleichen Maßnahmen erforderlich.

## Patentansprüche

1. Faseroptischer Verstärker, bestehend aus wenigstens einem mehrere Anschlüsse aufweisenden Pumpkoppler (2), einer mit einem ersten Anschluß (3) des Pumpkopplers verbundenen Pumplichtquelle (1) und einem mit einem weiteren Anschluß (5) des Pumpkopplers an einem Ende verbundenen Faserstück (7), das optische Verstärkungseigenschaft hat und dessen freies Ende und ein weiterer Anschluß (4) des Pumpkopplers zur Verbindung mit optischen Übertragungsleitungen (9; 8) dienen, **dadurch gekennzeichnet,** daß an wenigstens einem Ende des Verstärkungseigenschaft aufweisenden Faserstückes (7) mindestens ein auf die an jedem Ende des Faserstücks vorhandene Spleißstelle (11, 12) ausgerichteter Detektor (13, 15) zum Messen des an der Spleißstelle (11, 12) austretenden Streulichtes (S1', P1', S2', P2') angeordnet ist.

2. Faseroptischer Verstärker nach Anspruch 1, dadurch gekennzeichnet, daß auf die an jedem Ende des Faserstücks (7) vorhandene Spleißstelle (11, 12) mehrere Detektoren (13, 15) ausgerichtet sind.

3. Faseroptischer Verstärker nach Anspruch 1, dadurch gekennzeichnet, daß der Detektor (13, 15) im Streulicht (P1', P2') vorhandenes Pumplicht (P1, P2) in elektrische Signale umwandelt.

4. Faseroptischer Verstärker nach Anspruch 3, dadurch gekennzeichnet, daß dem Detektor (13, 15) Mittel vorgeschaltet sind, die nur Pumplicht (P1, P2) durchlassen.

5. Faseroptischer Verstärker nach Anspruch 4, dadurch gekennzeichnet, daß das Ausgangssignal des Detektors (13, 15) einer Auswerteeinrichtung zugeleitet wird und daß die Auswerteeinrichtung den faseroptischen Verstärker abschaltet, wenn das Detektorsignal einen vorgegebenen Schwellenwert überschreitet.

6. Faseroptischer Verstärker nach Anspruch 1, dadurch gekennzeichnet, daß der mindestens eine Detektor (13, 15) je nach Ausbreitungsrichtung des Signallichts dem eingangsseitigen oder ausgangsseitigen Spleiß (12) des Faserstücks (7) zugeordnet ist.

7. Faseroptischer Verstärker nach Anspruch 6, dadurch gekennzeichnet, daß der Detektor (13, 15) im Streulicht (S1, S2) vorhandenes Signallicht (S1, S2) in elektrische Signale umwandelt.

8. Faseroptischer Verstärker nach Anspruch 7, dadurch gekennzeichnet, daß dem Detektor (13, 15) Mittel vorgeschaltet sind, die nur Signallicht (S1, S2) durchlassen.

9. Faseroptischer Verstärker nach Anspruch 8, dadurch gekennzeichnet, daß das Ausgangssignal des Detektors (13, 15) einer Auswerteeinrichtung zugeleitet wird und daß die Auswerteeinrichtung den faseroptischen Verstärker abschaltet, wenn das Detektorsignal einen vorgegebenen Schwellenwert unterschreitet.

10. Faseroptischer Verstärker nach Anspruch 1, dadurch gekennzeichnet, daß der mindestens eine Detektor (13, 15) je nach Ausbreitungsrichtung des Signallichts einem jeweils ausgangsseitigen Spleiß (10, 11 oder 12) des Faserstücks (7) zugeordnet ist.

## Claims

1. A fiber-optic amplifier comprising at least one pump coupler (2) having several ports, a pump source (1) connected to a first port (3) of the pump coupler, and an amplifying length of fiber (7) having one end connected to another port (5) of the pump coupler, the free end of the amplifying length of fiber (7) and a further port (4) of the pump coupler serving to connect the fiber-optic amplifier to optical transmission lines (9; 8),
**characterized in** that at at least one end of the amplifying length of fiber (7), at least one detector (13, 15) pointed at the splice (11, 12) present at each end of the amplifying length of fiber is provided for measuring the scattered light (S1', P1', S2', P2') leaking from the splice (11, 12).

2. A fiber-optic amplifier as claimed in claim 1, characterized in that two or more detectors (13, 15) are pointed at the splice (11, 12) present at each end of the amplifying length of fiber (7).

3. A fiber-optic amplifier as claimed in claim 1, characterized in that the detector (13, 15) converts pump light (P1, P2) contained in the scattered light (P1', P2') into electric signals.

4. A fiber-optic amplifier as claimed in claim 3, characterized in that the detector (13, 15) is preceded by means which only allow pump light (P1, P2) to pass.

5. A fiber-optic amplifier as claimed in claim 4, characterized in that the output of the detector (13, 15) is fed to an evaluating device, and that the evaluating device turns the fiber-optic amplifier off when the detector signal exceeds a predetermined threshold.

6. A fiber-optic amplifier as claimed in claim 1, characterized in that the at least one detector (13, 15) is associated with the input-side splice or the output-side splice (12) of the amplifying length of fiber (7), depending on the propagation direction of the signal light.

7. A fiber-optic amplifier as claimed in claim 6, characterized in that the detector (13, 15) converts signal light (S1, S2) contained in the scattered light (S1', S2') into electric signals.

8. A fiber-optic amplifier as claimed in claim 7, characterized in that the detector (13, 15) is preceded by means which only allow signal light (S1, S2) to pass.

9. A fiber-optic amplifier as claimed in claim 8, characterized in that the output of the detector (13, 15) is fed to an evaluating device, and that the evaluating device turns the fiber-optic amplifier off when the detector signal falls below a predetermined threshold.

10. A filter-optic amplifier as claimed in claim 1, characterized in that the at least one detector (13, 15) is associated with a respective output-side splice (10, 11 or 12) of the amplifying length of fiber (7) depending on the propagation direction of the signal light.

## Revendications

1. Amplificateur à fibre optique composé au moins d'un coupleur de pompage (2) présentant plusieurs raccordements, d'une source lumineuse de pompage (1) reliée à un premier raccordement (3) du coupleur de pompage et d'une fibre (7), reliée par une des ses extrémités à un autre raccordement (5) du coupleur de pompage, ayant des propriétés optiques d'amplification et dont l'extrémité libre et un autre raccordement (4) du coupleur de pompage servent à établir la liaison avec des lignes de transmission optiques (9, 8), caractérisé en ce qu'au moins un détecteur (13, 15) orienté sur le point d'épissure (11, 12) présent à chaque extrémité de la fibre soit disposé à au moins une des extrémités de la fibre (7) ayant des propriétés d'amplification optique pour mesurer la lumière de dispersion (S1', P1', S2', P2') s'échappant du point d'épissure (11, 12).

2. Amplificateur à fibre optique selon la revendication 1, caractérisé en ce que plusieurs détecteurs (13, 15) sont orientés sur le point d'épissure (11, 12) présent à chaque extrémité de la fibre (7).

3. Amplificateur à fibre optique selon la revendication 1, caractérisé en ce que le détecteur (13, 15) transforme en signaux électriques la lumière de pompage (P1, P2) présente dans la lumière de dispersion (P1', P2').

4. Amplificateur à fibre optique selon la revendication 3, caractérisé en ce que le détecteur (13, 15) est équipé en amont d'éléments qui ne laissent passer que la lumière de pompage (P1, P2).

5. Amplificateur à fibre optique selon la revendication 4, caractérisé en ce que le signal de sortie du détecteur (13, 15) est amené à un dispositif d'analyse et en ce que ce dispositif d'analyse met hors circuit l'amplificateur a fibre optique quand le signal émis par le détecteur dépasse un seuil donné.

6. Amplificateur à fibre optique selon la revendication 1, caractérisé en ce qu'au moins un des détecteurs (13, 15) est associé, selon le sens d'élargissement du signal lumineux, au point d'épissure (12) d'entrée ou de sortie de la fibre (7).

7. Amplificateur à fibre optique selon la revendication 6, caractérisé en ce que le détecteur (13, 15) transforme en signaux électriques le signal lumineux (S1, S2) présent dans la lumière de dispersion.

8. Amplificateur à fibre optique selon la revendication 7, caractérisé en ce que le détecteur (13, 15) est équipé en amont d'éléments qui ne laissent passer que les signaux lumineux (S1, S2).

9. Amplificateur à fibre optique selon la revendication 8, caractérisé en ce que le signal de sortie du détecteur (13, 15) est amené à un dispositif d'analyse et en que ce dispositif d'analyse met hors circuit l'amplificateur à fibre optique quand le signal émis par le détecteur est en dessous d'un seuil donné.

10. Amplificateur à fibre optique selon la revendication 1, caractérisé en ce qu'au moins un des détecteurs (13, 15) est associé, selon le sens d'élargissement du signal lumineux, à une des épissures de sortie (10, 11 ou 12) de la fibre (7).
